# EUROPÄISCHE PATENTANMELDUNG

(11) **EP 1 962 362 A1**
(43) Veröffentlichungstag der Anmeldung: **27.08.2008**
(21) Anmeldenummer: 08002900.2
(22) Anmeldetag: 16.02.2008
(51) Int. Cl.: H01M 8/24, H01M 8/00, H01M 8/12

(54) **Kraft-Wärme-Kopplungsanlage**

(30) Priorität: 23.02.2007 AT 2862007
(71) Anmelder: Vaillant GmbH, 42859 Remscheid (DE)
(72) Erfinder: Badenhop, Thomas, 51688 Wipperfürth (DE); Plümke, Marco, 40225 Düsseldorf (DE)
(74) Vertreter: Hocker, Thomas

(57) **Zusammenfassung**

Kraft-Wärme-Kopplungsanlage, welche Strom und Abgase produziert, vorzugsweise eine Brennstoffzelle, bei der die Abgase in eine Vorrichtung zur Nutzung der Thermotunneling eingeleitet werden. Somit werden eine Verbesserung der Abwärmenutzung und eine Erhöhung der Laufzeit der Anlage erreicht.

## Beschreibung

Die Erfindung bezieht sich auf eine Kraft-Wärme-Kopplungsanlage, insbesondere ein Brennstoffzellensystem.

Dezentrale Energieversorgungsanlagen mit einer Kopplung von mechanischer oder elektrischer und thermischer Energie, so genannte Kraft-Wärme-Anlagen, werden verstärkt in die Hausenergieversorgung eingesetzt. Solche Anlagen nutzen die bei der Stromerzeugung anfallende Abwärme zur Beheizung des Gebäudes oder zur Warmwasserbereitung. Dabei wird eine Energiebereitstellung durch kleine Anlagen in Verbrauchernähe mit einem hohen Energienutzungsgrad gewährleistet.

Nachteilig an bis jetzt bekannten Kraft-Wärme-Anlagen ist die deutliche Einschränkung derer Nutzung in den Sommermonaten, da in dieser Periode die Heizungsfunktion entfällt und nur die Warmwasserbereitung als Wärmesenke zur Verfügung steht.

Aus der DE 199 51 217 A1 ist eine Vorrichtung mit mindestens einer Brennstoffzelle und einem mit der Brennstoffzelle über eine Abgasleitung verbundenen Wärmetauscher bekannt. In der Abgasleitung der Brennstoffzelle ist ein Stirlingmotor gekoppelt mit einem Strom-Generator zur Umwandlung von Wärme in elektrische Energie eingeschaltet. Somit wird eine weitgehende Ausnutzung der eingesetzten Primärenergie auch im Fall eines reinen Strombedarfs erreicht.

In der DE 10 2004 063 304 A1 ist eine weitere Vorrichtung zur Bereitstellung von Energie mit mindestens einer Brennstoffzelle und einer Wärmekraftmaschine beschrieben. Zur verbesserten Energieausnutzung und zur Verminderung der abzuführenden Abwärme wird durch ein im Dampfkreislauf verwendetes dampfförmiges Arbeitsmittel verbessert.

Beide Vorrichtungen aus dem Stand der Technik verwenden brennstoffzellenbasierten Stromerzeuger, welchen Wärmekraftmaschinen zur Steigerung des elektrischen Wirkungsgrades nachgeschaltet sind. Dabei wird eine Verringerung der abzuführenden Wärme erreicht.

Der Erfindung liegt die Aufgabe zugrunde, eine Kraft-Wärme-Kopplungsanlage zur Verfügung zu stellen, bei der die Nutzung der Abwärme weitgehend verbessert und die Laufzeit der Anlage erhöht wird.

Erfindungsgemäß wird dies gemäß den Merkmalen des Anspruchs 1 mit einer Kraft-Wärme-Kopplungsanlage, welche Strom und Abgase produziert und die Abgase in eine Vorrichtung zur Nutzung des Thermotunneling - Effektes eingeleitet werden.

Weitere vorteilhafte Ausgestaltungen der Erfindung ergeben sich aus den Merkmalen der abhängigen Ansprüche und der Beschreibung.

Unter Thermotunneling wird der Elektronenfluss durch ein Vakuum zwischen zwei etwa 7 nm (70 A) entfernten Elektroden verstanden. Durch das Vakuum sind die Elektroden bezüglich der Wärmeleitung trotz des geringen Abstandes gut isoliert. Die Elektronen fließen von der wärmeren Kathode zur kühleren Anode. Hierbei sind elektrische Leistungen von mehreren hundert Watt pro cm² möglich.

Die Erfindung wird nun anhand der Figuren näher erläutert. Hierbei zeigen
- Figur 1: eine Kraft-Wärme-Kopplungsanlage gemäß einer ersten Konfigurationsvariante,
- Figur 2: eine Kraft-Wärme-Kopplungsanlage gemäß einer zweiten Konfigurationsvariante und
- Figur 3: eine Kraft-Wärme-Kopplungsanlage gemäß einer dritten Konfigurationsvariante.

Die Erfindung wird nun anhand der Figuren detailliert erläutert.

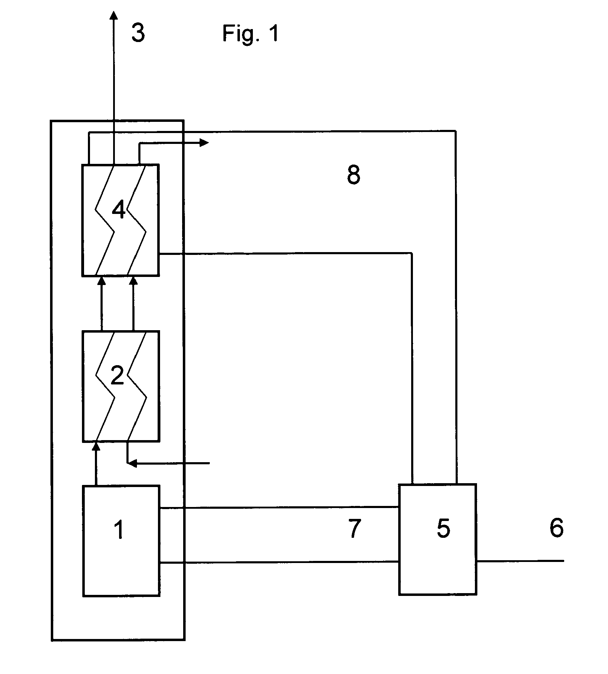

Figur 1 zeigt eine erste Konfiguration der erfindungsgemäßen Vorrichtung. Dabei sind ein als Stromerzeuger wirkendes, schematisch angedeutetes Hochtemperatur-Brennstoffzellensystem mit einer nicht dargestellten vorgeschalteten Brenngaserzeugung und einem Brennstoffzellenstapel (1) und ein Wärmetauscher (2) in einer Abgasleitung (3) nacheinander geschaltet. Es ist denkbar, dass als Stromerzeuger auch luftgekühlte und flüssiggekühlte Hochtemperaturbrennstoffzellen (z.B. SOFC bzw. HT-PEMFC), Wärmekraftmaschinen, Gasturbinen oder Verbrennungsmotoren mit interner oder externer Verbrennung eine Anwendung finden. Die produzierte Gleichspannung des Brennstoffzellenstacks, der sich aus mehreren in Reihe geschalteten einzelnen Brennstoffzellen zusammensetzt, wird über einen Wechselrichter (5) in den für das Netz (6) notwendigen Wechselstrom umgewandelt.

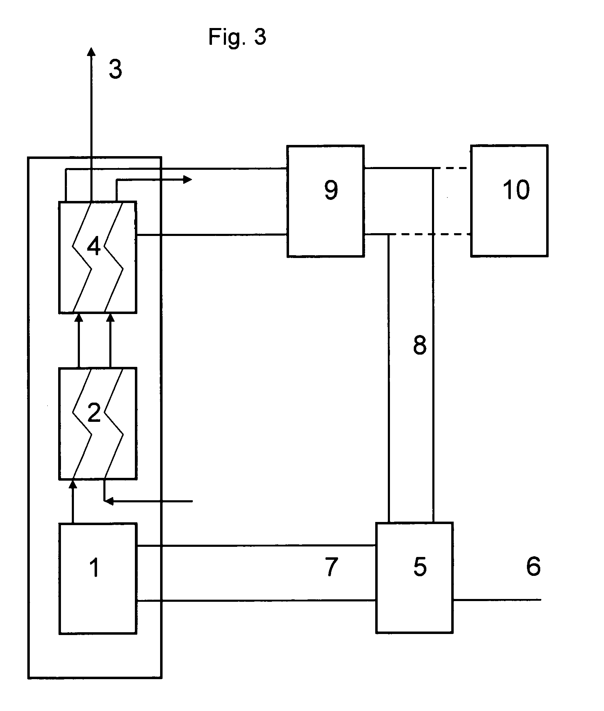

Dem Wärmetauscher (2) ist ein erfindungsgemäßer Wärmetauscher (4) nachgeschaltet, der die produzierte Wärme in elektrische Energie umwandelt. Dies geschieht nach dem so genannten Thermotunneling - Prinzip, beschrieben beispielsweise in der Europäischen Patentanmeldung EP 1 612 492 A1, nach dem ein Vakuumspalt zwischen den Elementen des Wärmetauschers von Elektronen zur Wärmeübertragung überwunden wird. Die Bewegung der Elektronen wird mittels speziell angebrachten Mikrostrukturen angeregt. Der erzeugte Strom wird über den Wechselrichter (5) in das Stromnetz (6) eingespeist. Es ist auch denkbar, dass der produzierte Strom zur Eigenversorgung der Kraft-Wärme-Kopplungsanlage verwendet wird. Dies ist am Besten in Figur 3 dargestellt, bei der mit (9) ein DC/DC Wandler bezeichnet ist und mit (10) Hilfsaggregate schematisch abgebildet sind.

Hierbei wird die metallische, warme Kathode durch die Abgase der Kraft-Wärme-Kopplungsanlage beheizt und die metallische, kältere Anode vom Kühlkreislauf der Kraft-Wärme-Kopplungsanlage gekühlt.

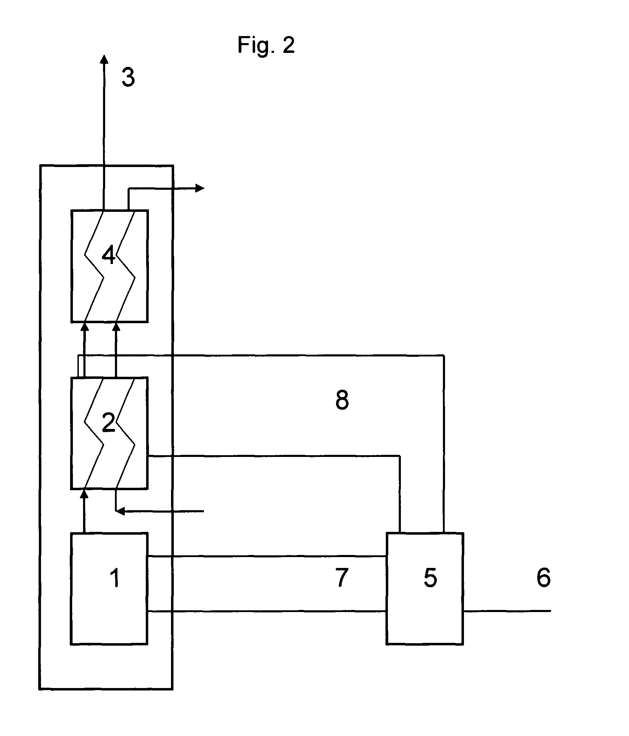

Aus den Figuren 1 und 2 ist ersichtlich, dass in den beiden Ausführungsbeispielen zur Einspeisung des durch den Thermotunneling - Wärmetauscher erzeugten Gleichstroms in ein Netz (6) kein separater Wechselrichter erforderlich ist. Der für die Brennstoffzelle vorgesehene Wechselrichter (5) kann vorteilhafterweise auch vom Thermotunneling - Wärmetauscher für die Umsetzung des erzeugten Gleichstroms verwendet werden.

Zur Steigerung der energetischen Effizienz ist im zweiten Ausführungsbeispiel gemäß Figur 2 vorgesehen, dass dem Thermotunneling - Wärmetauscher einen konventionellen Wärmetauscher nachgeschaltet ist. So wird der Effekt des Thermotunneling immer dann maximal genutzt, wenn die Kraft-Wärme-Anlage in Betrieb ist. Dadurch wird erreicht, dass weniger Wärme für den Heizkreis und die Warmwasserbereitung zur Verfügung steht und dass der elektrische Wirkungsgrad zunimmt. Dieser Effekt hat eine positive Wirkung auf die Laufzeit der Anlage.

## Patentansprüche

1. Kraft-Wärme-Kopplungsanlage (1), welche Strom und Abgase produziert, **dadurch gekennzeichnet, dass** die Abgase in eine Vorrichtung (4) zur Nutzung des Thermotunneling - Effektes eingeleitet werden.

2. Kraft-Wärme-Kopplungsanlage (1) nach Anspruch 1, **dadurch gekennzeichnet, dass** die Kraft-Wärme-Kopplungsanlage (1) ein Brennstoffzellensystem, ist.

3. Kraft-Wärme-Kopplungsanlage (1) nach Anspruch 1 oder 2, **dadurch gekennzeichnet, dass** der Strom der Kraft-Wärme-Kopplungsanlage (1) und der Vorrichtung (4) zur Nutzung der Thermotunneling an einen gemeinsamen Wechselrichter (5) angeschlossen sind.

4. Kraft-Wärme-Kopplungsanlage (1) nach einem der Ansprüche 1 bis 3, **dadurch gekennzeichnet, dass** die Vorrichtung (4) zur Nutzung der Thermotunneling aus einer metallischen, warmen Kathode und einer metallischen, kälteren Anode mit dazwischen liegendem dünnem Vakuum besteht, wobei die Abgase der Kraft-Wärme-Kopplungsanlage (1) die Kathode beheizen.

5. Kraft-Wärme-Kopplungsanlage (1) nach Anspruch 4, **dadurch gekennzeichnet, dass** die Anode von einer Kühlflüssigkeit gekühlt wird.

6. Kraft-Wärme-Koppelungsanlage (1) nach Anspruch 4, **dadurch gekennzeichnet, dass** die Anode mit Luft, insbesondere Umgebungsluft, gekühlt wird

7. Kraft-Wärme-Koppelungsanlage (1) nach Anspruch 4, **dadurch gekennzeichnet, dass** der Gleichstrom der Vorrichtung zur Nutzung des Thermotunneling - Effektes zur Versorgung der Hilfsaggregate der Kraft-Wärme-Kopplungsanlage mit elektrischer Energie genutzt wird.

8. Kraft-Wärme-Kopplungsanlage (1) nach Anspruch 1, **dadurch gekennzeichnet, dass** die Kraft-Wärme-Kopplungsanlage (1) eine luftgekühlte oder flüssiggekühlte Hochtemperaturbrennstoffzelle ist.

9. Kraft-Wärme-Kopplungsanlage (1) nach Anspruch 1, **dadurch gekennzeichnet, dass** die Kraft-Wärme-Kopplungsanlage (1) eine Wärmekraftmaschine ist.

10. Kraft-Wärme-Kopplungsanlage (1) nach Anspruch 1, **dadurch gekennzeichnet, dass** die Kraft-Wärme-Kopplungsanlage (1) eine Gasturbine ist.

11. Kraft-Wärme-Kopplungsanlage (1) nach Anspruch 1, **dadurch gekennzeichnet, dass** die Kraft-Wärme-Kopplungsanlage (1) ein Verbrennungsmotor mit interner oder externer Verbrennung ist.
